# EUROPÄISCHE PATENTANMELDUNG

(11) **EP 1 123 735 A2**
(43) Veröffentlichungstag der Anmeldung: **16.08.2001**
(21) Anmeldenummer: 01102565.7
(22) Anmeldetag: 06.02.2001
(51) Int. Cl.: B01J 19/00

(54) **Mikroreaktor für Reaktionsmedien in Form einer Suspension**

(30) Priorität: 09.02.2000 DE 10005542
(71) Anmelder: CPC Cellular Process Chemistry GmbH, 60343 Frankfurt (DE)
(72) Erfinder: Autze, Volker, Dr., 60385 Frankfurt (DE); Kim, Hieng, Dr., 61137 Schöneck (DE); Oberbeck, Sebastian, 35781 Weilburg (DE)

(57) **Zusammenfassung**

Die Erfindung betrifft einen Mikroreaktor zur Durchführung chemischer Reaktionen, wobei die chemische Prozessführung in horizontalen Räumen stattfindet, die von zwei oder mehreren übereinander gestapelten Platten oder Schichten gebildet werden, dadurch gekennzeichnet, dass diese Platten oder Schichten so strukturiert sind, dass Reaktionen durchgeführt werden können, bei denen mindestens ein Reaktionsmedium in Form einer Suspension auftritt.

## Beschreibung

Die Erfindung bezieht sich auf einen Mikroreaktor zur Durchführung chemischer Reaktionen, wobei die chemische Prozessführung in horizontalen Räumen stattfindet, die von zwei oder mehreren übereinander gestapelten Platten oder Schichten gebildet werden, wobei diese Platten oder Schichten so strukturiert sind, dass Reaktionen durchgeführt werden können, bei denen mindestens ein Reaktionsmedium in Form einer Suspension auftritt.

Ein solcher Mikroreaktor stellt ein miniaturisiertes Reaktionssystem für die Verfahrenstechnik und die chemische Prozesstechnik dar. Ein Mikroreaktor der oberbegrifflichen Art ist zum Beispiel aus der EP 0 688 242 B1 und der US 5,811,062 bekannt. Diese Mikroreaktoren werden aus einer Vielzahl von aufeinandergestapelten und miteinander verbundenen Plättchen aufgebaut, auf deren Oberflächen sich mikromechanisch erzeugte Strukturen befinden, die in ihrem Zusammenwirken Reaktionsräume bilden, um jeweils erwünschte chemische Reaktionen auszuführen. Es ist wenigstens ein durch das System hindurchführender Kanal enthalten, der mit dem Einlass und dem Auslass verbunden ist.

Die bisher bekannten Mikroreaktoren eignen sich jedoch nicht für solche Reaktionen, bei denen Feststoffe eingesetzt werden oder entstehen, die in suspendierter Form vorliegen, da diese Materialien die Mikrokanäle verstopfen können.

Der Erfindung liegt die Aufgabe zugrunde, ein Mikroreaktorsystem zu schaffen, das auch den Einsatz und/oder die Entstehung von Reaktionsmedien, welche in Form einer Suspension vorliegen, erlaubt. Der Mikroreaktor soll eine exakte Temperaturführung der Reaktionsprozesse ermöglichen, eine rasche Durchmischung der Reaktanten gewährleisten und durch ein geringes inneres Volumen das Gefahrenpotential von stark exothermen oder explosiblen Reaktionen reduzieren. Der Mikroreaktor soll ferner preiswert herstellbar sein, um gegebenenfalls im Einwegsystem verwendet zu werden. Die unterschiedlichen Funktionsmodule (Wärmeaustauscher, Mischer= Reaktor, Verweilstrecken, Verdampfer, Destillations- und/oder Extraktionseinheiten) können unabhängig vom jeweils durchzuführenden Reaktionstyp standardisiert gefertigt werden. Durch die Wahl der Fluidführungsöffnungen können diese Standard-Funktionsmodule, je nach Bedarf beliebig kombiniert werden und lösbar oder unlösbar miteinander verbunden werden.

Die gestellte Aufgabe wird aufgrund der Merkmale des Anspruchs 1 gelöst und durch die weiteren Merkmale der Unteransprüche ausgestaltet und weiterentwickelt. Im einzelnen werden Funktionsmodule gebildet, die sich im Hinblick auf die durchzuführende chemische Prozessführung geeignet zusammenstellen lassen und miteinander verbunden werden. Die modulare Bauweise ermöglicht eine einfache Anpassung an die jeweils auftretenden Bedingungen auch wechselnder Art, indem einzelne Elemente des Mikroreaktors austauschbar sind, um den Erfordernissen der gewählten Reaktion zu genügen oder wenn sich die erhofften Ergebnisse nicht einstellen oder wenn Defekte auftreten.

Durch Austausch von Komponenten kann man die Fluidführung schließlich so dimensionieren, dass sich eine verbesserte Temperaturführung der Reaktionen einstellt, oder dass eine höhere Selektivität und eine verringerte Bildung unerwünschter Nebenreaktionsprodukte beobachtet wird, d. h. dass man das erwünschte Produkt mit weniger Verunreinigungen erhält.

Der Begriff Suspension bedeutet vorstehend und nachfolgend ein System von mehreren Phasen, von denen eine kontinuierlich ist und mindestens eine fein verteilt ist. In der Regel sind solche Suspensionen Systeme, in welchen sich in einer flüssigen, kontinuierlichen Phase mindestens eine fein verteilte, feste Phase befindet.

Der Begriff Reaktionsmedium umfasst Gemische oder Reinstoffe, die Edukte, d.h. Reaktanten oder Produkte enthalten.

Die Formgebung des erfindungsgemäßen Mikroreaktors sind an sich unkritisch. Die einzelnen Platten oder Schichten können in jeder geometrischen Form vorliegen. Vorzugsweise sind sie rund, oval, quadratisch oder rechteckig. Quadratische Platten sind im Hinblick auf ihre Positionierbarkeit besonders bevorzugt.

Wesentlich für den erfindungsgemäßen Mikroreaktor sind die Dimensionen der mikrostrukturierten Bereiche, in denen die Reaktionsmedien in Form von Suspensionen vorliegen.

Diese müssen so groß gewählt werden, dass die Teilchen der feinverteilten Phase sie problemlos passieren können, ohne dass Verstopfungen auftreten. Die kleinste lichte Weite der Mikrostrukturen sollte etwa zehnmal größer als der Durchmesser der größten Teilchen der feinverteilten Phase sein. Weiterhin muss durch entsprechende geometrische Gestaltung Sorge getragen werden, dass keine Totwasserzonen, wie zum Beispiel Sackgassen oder scharfe Ecken, vorhanden sind, in denen sich die Teilchen der feinverteilten Phase absetzen können. Vorzugsweise werden die Reaktionsmedien in einer kontinuierlichen Bahn mit abgerundeten Ecken geführt.

Andererseits müssen die Strukturen klein genug sein, um die immanenten Vorteile der Mikroreaktionstechnik, nämlich hervorragende Wärmekontrolle, laminare Strömung, diffusives Mischen und geringes internes Volumen, auszunutzen. Daher sind die Strukturen in einer Dimension kleiner als 1000 µm, vorzugsweise kleiner als 800 µm, insbesondere kleiner als 600 µm.

Während die verfahrenstechnischen Einzeloperationen in den einzelnen Funktionsmodulen vor sich gehen, sind diese durch vertikale Kanäle miteinander verbunden, um das Reaktionsmedium von Stufe zu Stufe weiterzuverarbeiten. Die Funktionsmodule selbst enthalten horizontale Kanäle und Räume, die für die jeweilig vorgesehenen Prozessschritte zugeschnitten sind. Zwischen den Kanälen und den Räumen gibt es Trennstege, die aufgrund des auf den Stapel der Funktionsmodule ausgeübten Druckes dicht werden. Es ist somit festzustellen, dass für die Zu- und Abfuhr der Reaktions- und der Hilfsmedien vertikale Kanäle zuständig sind, während die Reaktionen selbst in sich horizontal erstreckenden Räumen stattfinden.

Als Material der Platten oder Schichten kommen Metall (Edelstahl), Glas, Keramik, Halbleitermaterial, insbesondere auf der Basis von Silizium, sowie Kunststoffe in Betracht. Die Auswahl dieser Werkstoffe oder von Kombinationen davon richtet sich nach dem vorgesehenen Verwendungszweck. Ganz besonders bevorzugt ist Edelstahl.

Bei der chemischen Prozessführung müssen diverse Parameter beachtet werden. Deshalb ist der Einbau von Sensoren in den Mikroreaktor vorgesehen, insbesondere zur Erfassung der Temperatur, des Drucks, gegebenenfalls der Strömungsgeschwindigkeit und des Volumenstroms. Die Sensoren sind mit Regelkreisen verbunden, um den Betriebsablauf zu steuern und zu regeln.

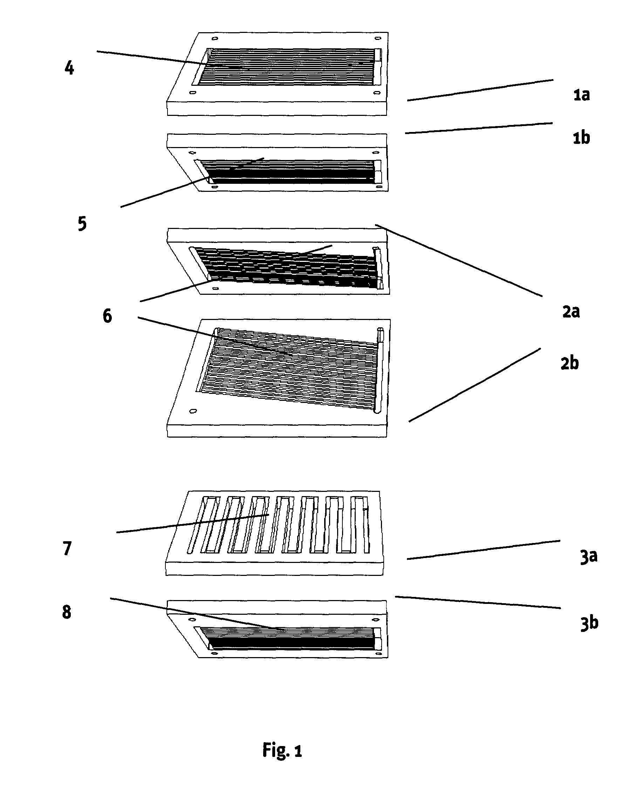

Die Erfindung wird anhand der Zeichnung beschrieben. Dabei zeigt Fig. 1 einen Mikroreaktor in schematischer, auseinander gezogener Darstellung.

Zwischen einer nicht gezeigten Deckelplatte und einer nicht gezeigten Bodenplatte sind eine Anzahl von Funktionsmodulen 1, 2 und 3 angeordnet, die durch den Zusammenbau unter Druck gehalten oder fest verbunden werden, um Abdichtflächen zwischen den Modulen zusammenzupressen. Jedes Funktionsmodul 1, 2 und 3 enthält eine Modulhälfte la, 1b bzw. 2a, 2b bzw. 3a, 3b. In der Deckelplatte sind Fluidanschlüsse angebracht. Von dort gibt es horizontale Kanäle zu Funktionsräumen 4, 5, 6, 7 und 8, die in der Regel ein Kanalsystem oder Labyrinthsystem beinhalten. Die Reaktionskanäle dieser Funktionsräume laufen im allgemeinen schräg oder quer zueinander.

Im dargestellten Ausführungsbeispiel sei angenommen, dass das Funktionsmodul 1a/1b einen Wärmetauscher darstellt, der aus einer Wärmetauscherhälfte 4 für Kühl- und/oder Heizmedium und einer Wärmetauscherhälfte 5 für Reaktantenführung besteht. Das Funktionsmodul 2a/2b sei ein Mischer aus einer Mischerhälfte 6 zur Führung eines Reaktionspartners A und einer Mischerhälfte 6 zur Führung eines Reaktionspartners B. Das Funktionsmodul 3a/3b stellt eine Verweilstrecke dar, die aus einer Verweilstreckenhälfte 7 für Reaktionsprodukt und einer Verweilstreckenhälfte 8 für Kühl- und/oder Heizmedium besteht.

Die Mikrostrukturen im Bereich der Wärmeaustauscher 4 und 8 haben eine Kanalbreite von 100 - 800 µm, vorzugsweise 300 - 600 µm, insbesondere 400 - 500 µm; und eine Kanalhöhe von 100 - 400 µm, vorzugsweise 200 -300 µm, insbesondere 225 - 275 µm. Da in diesen Bereichen keine Suspensionen auftreten, ist die Ausgestaltung der Fluidführung unproblematisch. Zum Erzielen einer effizienten Wärmeübertragung ist die Wandstärke der Trennwand zwischen Wärmeträger und Reaktionsmedium in der Regel kleiner als etwa 800 µm, vorzugsweise kleiner als etwa 400 µm. Daher weisen die Platten in der Regel eine Gesamtdicke von 500 - 1000 µm auf.

Die Mikrostrukturen im Bereich der Reaktionsmedien 5, 6 und 7 weisen in der Regel eine Kanalbreite von 400 -1000 µm, vorzugsweise 500 - 700 µm, insbesondere 550 - 650 µm und eine Kanalhöhe von 200 - 800 µm, vorzugsweise 400 - 600 µm, insbesondere 450 - 550 µm auf.

Die einzelnen Platten oder Schichten können durch Schraubverbindungen oder Klammerpressen zusammengehalten werden, wenn es um eine lösbare Verbindung geht. Man kann auch Schweißen, Bonden, Kleben, Löten oder Nieten anwenden, wenn ein solches Reaktionssystem nach dem Zusammenbau nicht mehr verändert werden soll.

Ein weiterer Gegenstand der Erfindung ist ein Prozess zur Herstellung eines erfindungsgemäßen Mikroreaktors zur Durchführung chemischer Reaktionen, welcher folgende Schritte umfasst:
(a) Herstellen einer Vielzahl von Platten oder Schichten, deren Oberflächen Mikro- und/oder feinwerktechnisch so strukturiert sind, dass sie die Handhabung von Reaktionsmedien, welche als Suspensionen auftreten, ermöglichen;
(b) Stapeln der einzelnen Platten oder Schichten in geeigneter Reihenfolge und Orientierung; und
(c) Dichtendes Verbinden des Stapels durch Anwendung von Druck oder Verbindungstechniken.

Die Strukturierung bei Schritt (a) kann durch Ätzen, Laser- und Wasserstrahlschneiden und -bohren, Stanzen und Prägen, Fräsen, Hobeln und Bohren, Spritzguss und Sintern sowie Funkerosiv und mit Kombinationen derselben erfolgen.

Vorzugsweise werden die Bleche der einzelnen Platten oder Schichten durch Ätzen, Laserstrahlschneiden und/oder -bohren hergestellt.

Die Lagen müssen derart übereinander gestapelt sein, dass zum einen die Fluidführungen und Trennwände vollständig erhalten bleiben. Zum anderen muss eine völlig flüssigkeits- und gasdichte Verbindung zwischen den einzelnen Lagen erfolgen.

Liegen die Oberflächenrauheiten im Bereich 1µm oder darunter und ist die Oberfläche absolut frei von Kratzern, sauber und fettfrei, so ist es möglich ein gasdichtes Aufeinanderliegen der Bleche durch Ausübung eines gleichmäßigen mechanischen Druckes auf den Stapel zu erreichen.

Grundlegend hierfür ist, das der verbleibende Restspalt kleiner als 1 um wird. Dies verursacht eine so hohen Strömungswiderstand zwischen den Platten, dass Fluide zwar geringfügig in den Spalt eintreten können aber keine Lecks darstellen, da keine Strömung, wie sie z.B. in Kapillaren vorkommt entstehen kann.

Der Werkstoff, aus dem die Funktionsmodule bestehen, richtet sich in erster Linie nach den zu verarbeitenden Stoffen und chemischen Prozessen. Allgemein kommen die für die Chemie tauglichen Werkstoffe Edelstahl, Glas, Keramik, Kunststoff und Halbleiterbaustoffe sowie Kombinationen dieser Werkstoffe in Betracht.

Insgesamt wird mit der Erfindung ein modular aufgebautes, miniaturisiertes Reaktionssystem zur Verfügung gestellt, das die Integration verschiedener, für die Prozessführung bedeutsamer Funktionen ermöglicht und das aufgrund seiner Mikrostruktur zur Durchführung von Reaktionen geeignet ist, bei denen mindestens ein Reaktionsmedium in Form von Suspensionen auftritt. Zu diesen Funktionen werden die Zuführung der Reaktanten, deren präprozessuale Wärmebehandlung, die Zusammenführung der Reaktanten unter kontrollierten thermischen Bedingungen, eine intermediäre thermische Behandlung sowie eine postprozessuale Verweilzeit und die Abfuhr des Reaktionsproduktes in geeignete Vorratsbehälter verstanden. Die erfindungsgemäße Mikrostruktur umfasst die Dimensionierung der Mikrokanäle und die Vermeidung von Totwasserzonen.

Weiterhin Gegenstand der Erfindung ist daher ein Verfahren zur Durchführung chemischer Reaktionen, wobei ein oder mehrere chemische Reaktanten in gasförmiger, flüssiger und/oder suspendierter Form in den von zwei oder mehreren übereinander gestapelten Platten oder Schichten eines erfindungsgemäßen Mikroreaktors gebildeten horizontalen Räumen gegebenenfalls gemischt und unter Bildung eines flüssigen und/oder suspendierten Reaktionsproduktes zur Reaktion gebracht werden, wobei mindestens ein Reaktionsmedium in Form einer Suspension vorliegt.

Der Begriff "flüssige Form" umfasst sowohl Reaktanten, die selbst in einem flüssigem Aggregatszustand vorkommen, als auch Reaktanten, die in einem Gemisch mit einem fluiden Verdünnungsmittel eingesetzt werden. In einer besonders bevorzugten Ausführungsform werden mindestens zwei Reaktanten in Gegenwart von mindestens einem Verdünnungsmittel in einem erfindungsgemäßen Mikroreaktor zur Reaktion gebracht.

Um das Verständnis der vorliegenden Erfindung zu erleichtern werden die nachfolgenden illustrativen Beispiele für mögliche Reaktionstypen dargelegt. Die vorliegende Erfindung ist nicht beschränkt auf diese spezifischen Ausführungsformen, sondern umfasst den vollen Umfang der Patentansprüche.

Beispiele für erfindungsgemäße Reaktionen sind Umsetzungen von Uracil mit Natriumnitrit und Cholesterol mit Brom.

### Beispiel 1:

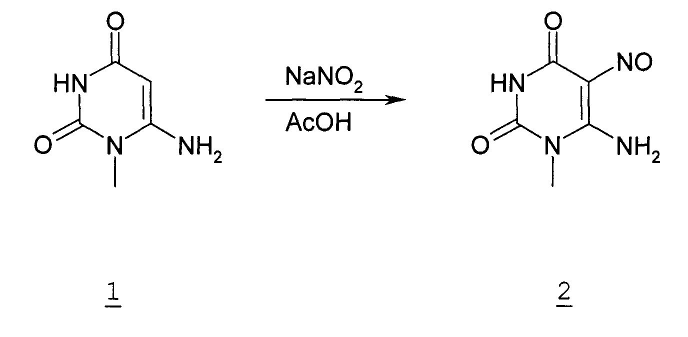

In einem Glasgefäß werden 2,00 g Edukt 1, 1,62 g Natriumnitrit und 4,00 g NaOH in Wasser gelöst und auf 100 ml aufgefüllt. In einem zweiten Gefäß werden 10,21 g Eisessig mit Wasser verdünnt und auf 100 ml aufgefüllt. Diese Lösungen werden über kalibrierten Kolbenpumpen mit einer Flussrate von jeweils 1 ml/min in die jeweiligen Edukteingänge des Mikroreaktors gepumpt. An dem Wärmetauscher-Kreislauf des Mikroreaktors ist ein Thermostat angeschlossen, der die gewünschten Reaktionstemperaturen von 50 °C einstellt. Die aus dem Reaktor austretende Produkt-Suspension wird in einem Kolben gesammelt, nach dem Abkühlen auf Raumtemperatur zur vollständigen Kristallisation abgesaugt und mit Wasser neutral gewaschen und getrocknet. Produkt 2 wird in einer Ausbeute von 85 % erhalten.

### Beispiel 2:

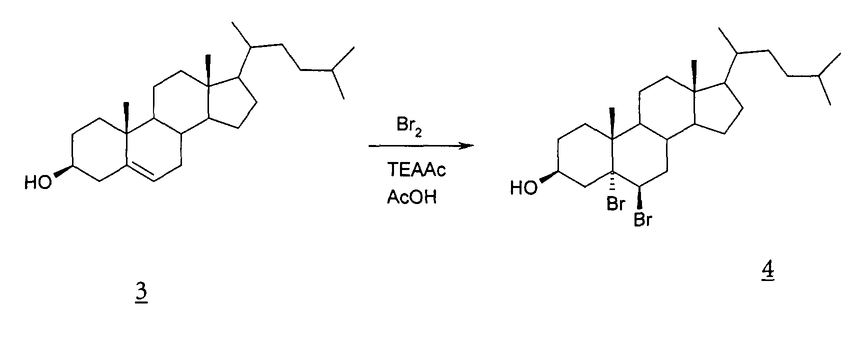

38,7 g Cholesterol 3 und 15,5 ml einer 1 molaren Triethylaminacetat-Lösung in wasserfreiem Diethylether werden mit wasserfreiem Diethylether auf 300 ml aufgefüllt. 16,0 g Brom werden in 150 ml Eisessig gelöst. Über kalibrierte Kolbenpumpen wird die Edukt-Lösung mit einer Flussrate von 6 ml/min, die Brom-Lösung mit einer Flussrate von 3 ml/min in die jeweiligen Edukteingänge des Mikroreaktors gepumpt. An dem Wärmetauscher-Kreislauf des Mikroreaktors ist ein Thermostat angeschlossen, der die gewünschten Reaktionstemperaturen von 30 °C einstellt. Die aus dem Reaktor austretende Produkt-Suspension wird in einem Kolben gesammelt, bei Raumtemperatur abgesaugt, mit kaltem Eisessig bis zum farblosen Ablauf gewaschen und getrocknet. Produkt 4 wird in einer Ausbeute von 70 % erhalten.

## Patentansprüche

1. Mikroreaktor zur Durchführung chemischer Reaktionen, wobei die chemische Prozessführung in horizontalen Räumen stattfindet, die von zwei oder mehreren übereinander gestapelten Platten oder Schichten gebildet werden, dadurch gekennzeichnet, dass diese Platten oder Schichten so strukturiert sind, dass Reaktionen durchgeführt werden können, bei denen mindestens ein Reaktionsmedium in Form einer Suspension auftritt.

2. Mikroreaktor nach Anspruch 1, wobei Platten oder Schichten (1a, 1b, 2a, 2b, 3a, 3b) so übereinander gestapelt sind, dass sich Kanäle und sich horizontal erstreckende Räume (4,5,6,7,8) für die chemische Prozessführung bilden, wobei Funktionsmodule gebildet werden, in denen jeweils einzelne physikalische oder chemische Funktionen ausführbar sind, dadurch gekennzeichnet, dass die Mikrostrukturen im Bereich der Reaktionsmedien (5, 6 und 7) Kanalbreiten von 400 - 1000 µm, vorzugsweise 500 - 700 µm, insbesondere 550 - 650 µm und Kanalhöhen von 200 - 800 µm, vorzugsweise 400 - 600 µm, insbesondere 450 - 550 µm und nur Geometrien aufweisen, die keine Totwasserzonen bilden.

3. Mikroreaktor nach Anspruch 1 oder 2, dadurch gekennzeichnet, dass die Mikrostrukturen im Bereich der Wärmeaustauschermedien (4 und 8) Kanalbreiten von 100 - 800 µm, vorzugsweise 300 - 600 µm, insbesondere 400 - 500 µm und Kanalhöhen von 100 - 400 µm, vorzugsweise 200 - 300µm aufweisen, insbesondere 225 - 275 µm aufweisen.

4. Mikroreaktor nach Anspruch 1 bis 3, dadurch gekennzeichnet, dass die Reaktionsmedien in einer kontinuierlichen Bahn mit abgerundeten Ecken geführt werden.

5. Mikroreaktor nach Anspruch 1 bis 4, dadurch gekennzeichnet, dass die Prozessführung folgende Schritte umfasst:
• Zuführung von Reaktanten,
• deren präprozessuale Wärmebehandlung,
• Zusammenführung der Reaktanten unter kontrollierten thermischen Bedingungen,
• eine intermediäre thermische Behandlung,
• eine postprozessuale Verweilzeit,
• und Abfuhr des oder der Reaktionsprodukte.

6. Mikroreaktor nach einem der Ansprüche 1 bis 5, dadurch gekennzeichnet, dass Sensoren zur Erfassung von Prozessparametern, wie Temperatur, Druck, Strömungsgeschwindigkeit, Volumen oder Massestrom, pH-Wert, entweder in einzelnen Funktionsmodulen oder außerhalb angebracht sind.

7. Mikroreaktor nach einem der Ansprüche 1 bis 6, dadurch gekennzeichnet, dass Regelkreise vorgesehen sind, die aufgrund gemessener Parameter den Materialfluss in den fluidischen Anschlüssen sowie die Energiezufuhr und -abfuhr hinsichtlich der Funktionsmodule regeln.

8. Mikroreaktor nach einem der Ansprüche 1 bis 7, dadurch gekennzeichnet, dass als integrierte Funktionsmodule Mischer, Wärmetauscher, Verweilstrecken, Filter, Verdampfer, Destillationskolonnen oder Extraktionskolonnen vorgesehen sind.

9. Prozess zur Herstellung eines Mikroreaktors zur Durchführung chemischer Reaktionen nach einem der Ansprüche 1 bis 8, welcher folgende Schritte umfasst:
(a) Herstellen einer Vielzahl von Platten oder Schichten, deren Oberflächen mikro- und/oder feinwerktechnisch so bearbeitet werden, dass sie Abdichtzonen und - zusammen mit der Oberfläche einer weiteren Platte oder Schicht - horizontale Reaktionsräume aufweisen;
(b) Stapeln der einzelnen Platten oder Schichten in geeigneter Reihenfolge und Orientierung; und
(c) Dichtendes Anpressen oder fest Verbinden der einzelnen Platten oder Schichten.

10. Verfahren zur Durchführung chemischer Reaktionen, dadurch gekennzeichnet, dass ein oder mehrere chemische Reaktanten in gasförmiger und/oder flüssiger und/oder suspendierter Form in den von zwei oder mehreren übereinander gestapelten Platten oder Schichten eines Mikroreaktors nach einem der Ansprüche 1 bis 8 gebildeten horizontalen Räumen gegebenenfalls gemischt und unter Bildung eines flüssigen, gelösten oder suspendierten Reaktionsproduktes gebracht werden, dadurch gekennzeichnet, dass mindestens ein Reaktionsmedium in Form einer Suspension auftritt.
